# DEMANDE DE BREVET EUROPEEN

(11) **EP 1 498 191 A1**
(43) Date de publication de la demande: **19.01.2005**
(21) Numéro de dépôt: 04291713.8
(22) Date de dépôt: 07.07.2004
(51) Int. Cl.: B09C 1/06, F23G 7/14

(54) **Procédé et installation pour la dépollution en continu de terres ou de boues**

(30) Priorité: 15.07.2003 FR 0308636
(71) Demandeur: Institut Français du Pétrole, 92852 Rueil-Malmaison Cedex (FR)
(72) Inventeur: Marty, Eric, 69495 Pierre-Bénite (FR); van Hulle, Pascal, 91190 Gif-sur-Yvette (FR)

(57) **Abrégé**

L'invention porte sur un procédé et sur une installation pour dépolluer en continu une charge solide comportant essentiellement des terres ou des boues ainsi que des polluants organiques. Le procédé comporte les étapes suivantes dans lesquelles :
a) on fait passer un courant gazeux (3,4,5) porté à une température supérieure à la température de désorption de l'eau à travers une couche de charge solide, de manière à récupérer une charge solide dépolluée et un effluent gazeux comportant des polluants,
b) on sépare l'effluent gazeux comportant des polluants de la charge solide dépolluée,
c) on envoie ledit effluent gazeux dans une zone d'oxydation (30) de manière à oxyder les polluants et à récupérer un effluent gazeux oxydé,
d) on envoie une portion de l'effluent gazeux oxydé dans une unité de traitement (40), et on introduit une autre portion de l'effluent gazeux oxydé comme courant gazeux lors de l'étape a).

## Description

La présente invention concerne un procédé et un dispositif pour le traitement de terres ou de boues contaminées par de la matière organique. Ces terres ou ces boues contaminées peuvent provenir d'anciens sites industriels, par exemple des sites de forage ou des anciennes usines à gaz.

L'une des applications de l'invention est la remédiation de terres ou de boues contaminées par des effluents hydrocarbonés pouvant contenir des produits chlorés ou d'autres polluants tels que, par exemple, des dioxines.

Il est déjà connu par le brevet américain US 5,337,684 une méthode et un dispositif pour dépolluer des matériaux pouvant s'écouler, tels que des liquides, des boues ou des terres. Dans le dispositif décrit dans ce brevet, les matériaux contaminés sont chauffés par contact direct avec un fluide de chauffage. La chaleur dégagée avec les polluants vaporisés est ensuite récupérée et réutilisée dans les différents moyens de chauffage.

L'un des problèmes techniques posé par une telle méthode est de récupérer par désorption une grande quantité de polluants, lors de la mise en contact d'une charge à base de terres ou de boues avec un courant gazeux chaud, De plus, le transfert des polluants entre la charge solide et le courant gazeux n'est pas optimisé. En outre, la consommation énergétique et les dégagements de polluants à l'atmosphère sont augmentés lors de l'enchaînement d'étapes.

La présente invention se propose de remédier aux inconvénients précités grâce à un procédé permettant de concilier une dépollution efficace des terres ou des boues contaminées, une récupération sélective des polluants et une bonne optimisation des rendements énergétiques.

Pour cela, la présente invention concerne un procédé pour dépolluer en continu une charge solide comportant essentiellement des terres ou des boues ainsi que des polluants organiques dans lequel :
a) on fait passer un courant gazeux porté à une température supérieure à la température de désorption de l'eau à travers une couche de charge solide, de manière à récupérer une charge solide dépolluée et un effluent gazeux comportant des polluants,
b) on sépare l'effluent gazeux comportant des polluants de la charge solide dépolluée,
c) on envoie ledit effluent gazeux dans une zone d'oxydation de manière à oxyder les polluants et à récupérer un effluent gazeux oxydé,
d) on envoie une portion de l'effluent gazeux oxydé dans une unité de traitement et on introduit une autre portion de l'effluent gazeux oxydé comme courant gazeux dans la zone de mise en contact de l'étape a).

De préférence, lors de l'étape a), la vitesse à laquelle on fait passer le courant gazeux à travers la couche de charge solide peut être inférieure à la vitesse minimum de fluidisation de ladite charge solide.

La vitesse du courant gazeux à travers la couche de charge solide peut être inférieure à 1 m/s, de manière plus préférée inférieure à 0,5 m/s, de manière encore plus préférée inférieure à 0,25 m/s.

Le courant gazeux passé à l'étape a) peut présenter une teneur en eau supérieure à 10 % en volume, de préférence supérieure à 15 % en poids.

Avantageusement, l'étape a) du procédé de l'invention peut être réalisée à une température allant de 500 à 1200 °C, de préférence de 700 à 1000 °C, de manière plus préférée de 800 à 900 °C.

L'étape a) peut être avantageusement réalisée dans plusieurs zones de mise en contact disposées en série, au moins l'une desdites zones utilisant une portion du courant gazeux.

Préférentiellement, au moins une portion du courant gazeux traversant la couche de charge solide peut présenter une teneur en oxygène allant de préférence de 2,5 à 15 %, de manière plus préférée allant de 5 à 10 % en volume.

On peut introduire un courant gazeux d'appoint contenant de l'oxygène lors de la réalisation de l'étape a).

Pour ce faire, on peut introduire un courant gazeux d'appoint contenant de l'oxygène dans le courant gazeux utilisé dans l'étape a) et/ou avec le courant gazeux utilisé dans l'étape a).

Egalement, on peut introduire un courant gazeux d'appoint contenant de l'oxygène lors de la réalisation de l'étape c).

On peut introduire un courant gazeux d'appoint contenant de l'oxygène dans la zone d'oxydation pour la réalisation de l'étape c) et/ou dans l'effluent gazeux de l'étape b) avant son introduction dans la zone d'oxydation de l'étape c).

L'invention concerne également une installation pour dépolluer en continu une charge solide. Cette installation comporte :
- au moins un moyen d'alimentation d'un courant gazeux chaud et un moyen d'alimentation de la charge solide,
- un dispositif de mise en contact de la charge solide avec le courant gazeux chaud comportant des moyens pour former une couche de charge solide et des moyens permettant de faire passer le courant gazeux à travers la couche de charge solide ainsi formée,
- des moyens de séparation comportant un moyen d'évacuation de la charge solide dépolluée et un moyen d'évacuation d'un effluent gazeux issu du passage du courant gazeux à travers la couche de charge solide,
- un moyen d'oxydation comportant des moyens précurseurs d'une réaction d'oxydation et un moyen d'évacuation d'un effluent gazeux oxydé,
- un moyen d'alimentation d'une unité de traitement pour le nettoyage de l'effluent gazeux oxydé et un moyen de recyclage relié au moyen du courant gazeux.

Le dispositif de mise en contact de la charge solide avec le courant gazeux peut comporter :
- un tambour pourvu d'orifices et monté rotatif autour de son axe longitudinal, ledit tambour comportant des moyens permettant d'obtenir un écoulement d'une couche de charge dans ledit tambour, et
- une enceinte, à l'intérieur de laquelle est logé le tambour, reliée à au moins un moyen d'alimentation en courant gazeux et comportant des moyens permettant de faire passer le courant gazeux à travers lesdits orifices.

Les moyens permettant de faire passer le courant gazeux à travers les orifices dans la partie basse du tambour peuvent comporter des moyens de distribution de courant gazeux permettant de faire passer des fractions distinctes dudit courant dans différentes zones de mise en contact définies le long de l'axe longitudinal du tambour.

Avantageusement, un moyen d'alimentation d'un courant gazeux d'appoint contenant de l'oxygène peut être relié au moyen d'alimentation du courant gazeux.

Ce moyen d'alimentation d'un courant gazeux d'appoint contenant de l'oxygène peut être relié directement à l'enceinte.

Un moyen d'alimentation d'un courant gazeux d'appoint contenant de l'oxygène peut être relié au moyen d'oxydation.

Un moyen d'alimentation d'un courant gazeux d'appoint contenant de l'oxygène peut être relié au moyen d'évacuation d'un effluent gazeux issu du passage du courant gazeux à travers la couche de charge solide.

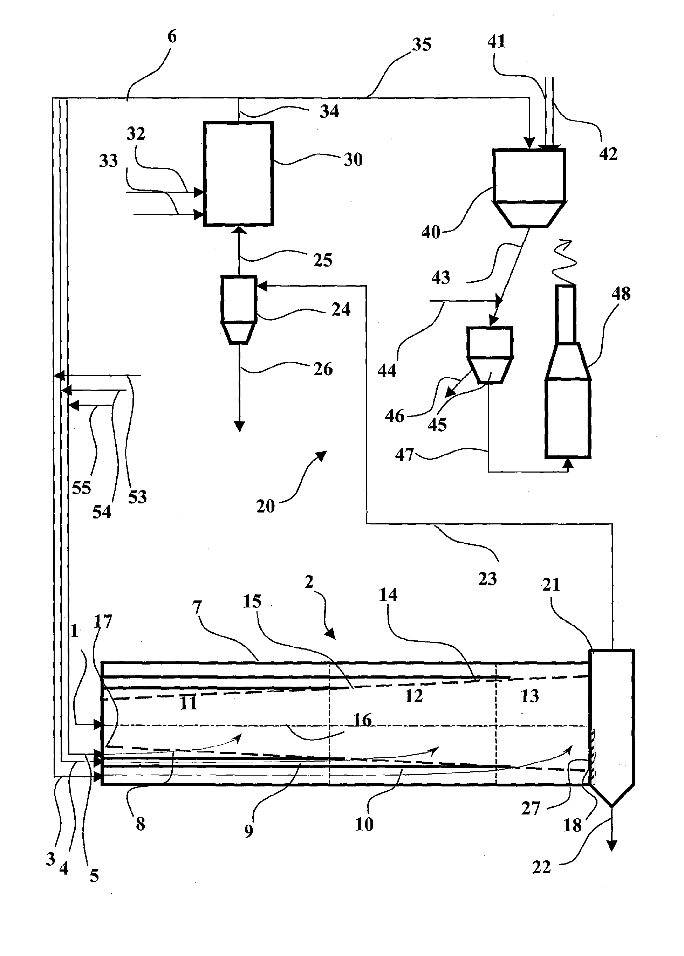

Les autres caractéristiques et avantages de l'invention apparaîtront à la lecture de la description d'un mode de réalisation du procédé de l'invention tel qu'illustré à la Figure 1. Ce mode de réalisation est donné à titre d'exemple et ne présente aucun caractère limitatif. Cette illustration du procédé de l'invention ne comporte pas l'ensemble des composantes nécessaires à sa mise en oeuvre. Seules les éléments nécessaires à la compréhension de l'invention y sont représentés, l'homme du métier étant capable de compléter cette représentation pour mettre en oeuvre l'invention.

L'installation comprend un moyen d'alimentation 1 d'une charge solide à l'entrée d'un four tournant 2 de type "roto-louvre", four qui est mieux décrit, à titre d'exemple, dans "Chemical Engineering Handbook, 4^{th} édition, pages 20-29"

Cette charge solide est typiquement une terre contaminée par au moins de la matière organique. Cette charge comporte classiquement :
- une matrice, telle que par exemple de l'argile, du sable, pouvant comporter du carbone minéral et/ou des goudrons,
- des polluants organiques volatils, semi-volatils et/ou lourds, tels que par exemple de l'essence, du fuel, de l'huile et/ou des hydrocarbures aromatiques polycycliques,
- de l'eau, et
- éventuellement des polluants non organiques comme des métaux, tels que par exemple du fer et/ou du mercure.

La charge solide peut comporter jusqu'à 15 %, classiquement autour de 10 % en poids de polluants organiques et autour de 20 % en poids d'eau par rapport à la matrice.

Si la teneur en eau de la charge solide est supérieure à 20 % en poids, un séchage de la charge solide peut être effectué par des techniques conventionnelles connues de l'homme du métier, afin de ramener cette teneur à environ 20 % en poids, et cela au préalable de son introduction dans le four.

Le four 2 est alimenté par trois conduites 3, 4, 5 en fractions d'un courant gazeux chaud amené par une conduite 6.

Chaque conduite est équipée d'une conduite d'alimentation en courant gazeux d'appoint, respectivement 53, 54, 55, ce courant gazeux d'appoint pouvant comporter de l'eau et/ou de l'oxygène. Préférentiellement, la conduite 54 équipant la conduite d'alimentation 4 permet l'écoulement d'un courant gazeux d'appoint comportant de l'oxygène dans l'effluent gazeux circulant dans la conduite 4.

Le courant gazeux d'appoint présente généralement une teneur en oxygène et/ou une teneur en eau permettant de remplacer l'oxygène consommé par oxydation ou par purge.

Le four 2 comporte une enceinte 7 équipée de moyens séparés 8, 9 et 10 permettant de distribuer les fractions du courant gazeux dans trois zones de mise en contact 11, 12 et 13 de la charge et des fractions de courant gazeux. Ces moyens sont reliés respectivement aux conduites d'alimentation 3, 4 et 5 par tous moyens connus. Ainsi, la conduite 5 alimente, par le moyen de distribution 8, une première zone 11 de mise en contact située à l'entrée du four, la conduite 4 alimente, par le moyen de distribution 9, une deuxième zone 12 située approximativement dans le milieu de ce four et la conduite 3 alimente, par le moyen de distribution 10, la zone de mise en contact 3 située à la sortie du four.

Chacun de ces moyens séparés peut comporter des moyens de chauffage et/ou une conduite d'alimentation d'un courant gazeux d'appoint comme décrit précédemment.

Le four comporte un tambour 14 pourvu d'orifices 15 et monté rotatif autour de son axe longitudinal 16, dont la partie basse est inclinée de manière à obtenir un écoulement par gravité d'une couche de charge solide (non représentée) entre une extrémité haute 17 du tambour 14 reliée au moyen d'alimentation 1 et une extrémité basse 18 de ce même tambour 14.

Le tambour peut également avoir une forme cylindrique ou, de préférence comme décrit, une forme tronconique. Dans le deuxième cas, l'écoulement de la couche de charge solide peut se faire avantageusement de l'extrémité présentant la section droite la plus petite vers l'extrémité présentant la section droite la plus grande.

Les fractions du courant gazeux véhiculées par les conduites 3, 4 et 5 passent à travers la couche de charge solide (non représentée) formée le long de la partie basse du tambour 14 dans les zones de mise en contact 11, 12 et 13.

La hauteur de la couche de charge solide dans le tambour 14 peut être régulée grâce à un obstacle 27 à hauteur réglable monté sur l'extrémité basse 18 du tambour 14.

Cette couche de charge solide peut présenter une variation relative d'épaisseur inférieure à 50 %, de préférence inférieure à 30 % de manière plus préférée inférieure à 10 %.

L'extrémité basse 18 du tambour 14 est reliée à un moyen de séparation 20 comprenant un collecteur 21 muni d'un moyen 22 pour l'évacuation de la charge solide et une conduite d'évacuation 23 d'un effluent gazeux. Le moyen de séparation comporte, en outre, un cyclone 24 relié à la conduite 23 et dans laquelle circule l'effluent gazeux issu du passage du courant gazeux à travers la couche de ladite charge solide. Ce cyclone 24 évacue une phase gazeuse par la conduite d'évacuation 25 et une phase solide par une conduite 26, ladite conduite 26 pouvant être reliée au moyen 22 pour l'évacuation de la charge solide dépolluée. La charge solide dépolluée peut subir une trempe avec de l'eau (non représentée). Dans le mode de réalisation représenté, le moyen de séparation 20 est donc constitué, d'une part, par le collecteur 21 muni de son moyen 22 pour l'évacuation de la charge solide dépolluée et de la conduite 23 pour l'évacuation de l'effluent gazeux issu du passage du courant gazeux à travers la couche de charge solide et, d'autre part, par le cyclone 24 avec la conduite d'alimentation en effluent gazeux 23, la conduite d'évacuation 25 de la phase gazeuse et la conduite d'évacuation 26 de la phase solide.

La conduite d'évacuation 25 de la phase gazeuse est reliée à une enceinte d'oxydation, qui est, dans l'exemple décrit, une chambre de combustion, par exemple un four, et qui comprend des moyens précurseurs d'une réaction d'oxydation, tels qu'un brûleur (non représenté) équipé de conduites d'alimentation en combustible 32 et en air 33.

L'effluent gazeux oxydé issu de la chambre de combustion 30 est évacué par une conduite 34. A partir de cette conduite d'évacuation, une portion de cet effluent gazeux oxydé est recyclée dans le four tournant 2 par la conduite 6 et les conduites 3, 4, 5. L'autre portion est envoyée par une conduite 35 dans une unité de traitement.

De préférence, la conduite de recyclage 6 et la conduite d'alimentation 35 de l'unité de traitement de l'effluent gazeux oxydé sont, l'une ou/et l'autre, équipées de vannes de régulation reliées à un dispositif permettant de réguler le débit dans l'une ou l'autre de ces conduites.

L'unité de traitement comporte une chambre de traitement 40 où est refroidie, par trempage à l'eau, la portion de l'effluent gazeux oxydé alimenté par la conduite 35. L'eau est introduite par une conduite 41 dans la chambre 40. De la soude est également envoyée dans la chambre 40 par l'intermédiaire d'une conduite 42 reliée à ladite chambre. L'effluent gazeux ainsi refroidi est évacué par une conduite d'évacuation 43 qui est reliée à un dispositif de filtration 45. Une conduite 44 permet d'injecter des additifs, tels que de la chaux, du bicarbonate et/ou du charbon actif, dans l'effluent gazeux refroidi afin de capturer d'éventuels métaux ou autres polluants.

Le dispositif de filtration 45 permet de récupérer dans une conduite 46 les additifs injectés dans la conduite 44 ainsi que d'éventuelles particules en suspension. L'effluent filtré est évacué par la conduite 47 et envoyé dans une cheminée 48 permettant le rejet à l'atmosphère de l'effluent gazeux oxydé ainsi nettoyé.

Lors du fonctionnement, la charge solide est introduite à l'entrée du four tournant par la conduite 1 et les trois zones de mises en contact 11, 12, 13 de ce four sont alimentées par les fractions de courant gazeux chaud circulant dans les conduites 3, 4, 5 et les moyens de distribution 8, 9 10.

Dans cette étape du procédé, on met la charge solide dans le four en forme d'une couche et on procède généralement à un écoulement continu de la couche de charge solide. La mise en contact de la charge solide avec les fractions de courant gazeux consiste à faire passer ce courant gazeux à travers la couche de charge solide, cette mise en contact peut être répertoriée parmi les méthodes de mise en contact par percolation d'un gaz à travers un solide.

Généralement, on cherche à obtenir une couche de charge solide ayant une épaisseur répartie de manière homogène sur la surface de contact. On entend par surface de contact, la surface recouverte par la couche de charge solide à travers laquelle on fait passer le courant gazeux. On cherche ainsi à éviter tout passage privilégié du courant gazeux à travers une zone particulière de la surface de contact afin d'assurer une mise en contact homogène du courant gazeux avec la charge solide.

Le moyen pour former une couche de charge solide peut être tout moyen connu de l'homme du métier. On peut, par exemple, utiliser un moyen pour déverser la charge solide sur un support incliné, à travers lequel on injecte le courant gazeux.

Le moyen pour former la couche de charge solide est généralement associé à un moyen pour établir un écoulement de cette même couche. Cet écoulement peut être réalisé par tout moyen connu de l'homme du métier. On peut, par exemple, envisager que cet écoulement soit obtenu par un support mobile, tel qu'un tapis roulant, comportant des orifices pour laisser passer le courant gazeux à travers la couche de charge solide mise en forme sur ledit support. On peut également envisager que l'écoulement de la couche de charge solide soit obtenu par gravité grâce à un support incliné, comme le tambour 14 décrit en relation avec la figure 1, cet écoulement pouvant être éventuellement facilité par mouvements du support.

Préférentiellement, lors cette mise en contact, la vitesse à laquelle on fait passer le courant gazeux à travers la couche de charge solide est inférieure à la vitesse minimum de fluidisation de ladite charge solide. On entend par vitesse minimum de fluidisation la vitesse minimum du courant gazeux à partir de laquelle un lit fluidisé de charge solide s'établit. Cette vitesse minimum de fluidisation dépend généralement des caractéristiques de la charge solide et du courant gazeux. Ainsi, on fait passer le courant gazeux à travers la couche de charge solide avec une vitesse suffisamment réduite pour limiter les entraînements de la charge solide avec le courant gazeux.

De préférence, la vitesse du courant gazeux à travers la couche de charge solide est inférieure à 1 m/s, de manière plus préférée inférieure à 0,5 m/s, de manière encore plus préférée inférieure à 0,25 m/s.

Le courant gazeux comporte généralement un gaz inerte qui peut être choisi parmi le groupe formé par l'azote ou le dioxyde de carbone.

Dans certains cas, le courant gazeux peut avantageusement comporter de l'eau injectée par les conduits 53, 54, 55 dans les conduits 3, 4, 5. En jouant sur le débit et la teneur en eau du courant gazeux, on peut établir un compromis entre le besoin de limiter les entraînements de la charge solide par ledit courant gazeux et le besoin de maximiser le transfert thermique entre ledit courant et ladite charge. La teneur en eau dans le courant gazeux peut généralement aller de 0 à 20 % en poids. De préférence, le courant gazeux présente une teneur en eau supérieure à 10 % en volume, de préférence supérieure à 15 % en poids.

Cette étape du procédé peut être réalisée sous une pression aux alentours de la pression atmosphérique. Afin de prévenir tout problème de fuite vers l'extérieur de l'enceinte du four, on peut établir, de préférence, une pression relative négative pouvant aller jusqu'à -2000 Pa.

Cette mise en contact de la charge solide avec le courant gazeux peut être mise en oeuvre dans une ou plusieurs zones de mise en contact disposées en série ou en parallèle, au moins l'une desdites zones utilisant une fraction du courant gazeux.

Comme illustré sur la figure, on procède à un écoulement continu d'une couche de charge solide à travers trois zones de mise en contact 11, 12, 13 disposées en série.

Le temps de séjour de la charge solide dans les zones de mise en contact avec le courant gazeux peut aller de 10 minutes à 5 heures, de préférence de 20 minutes à 3 heures, de manière plus préférée de 30 minutes à 1 heure.

Après la traversée de la couche de charge solide, le courant gazeux comporte généralement des polluants organiques. Ces polluants peuvent, en contact avec l'oxygène présent dans le courant gazeux, être une source d'inflammation ou d'explosion.

Avantageusement, cette mise en contact autorise la présence d'oxygène dans le courant gazeux avec un rapport entre le volume d'oxygène et le volume de polluants volatils dans le courant gazeux pouvant aller jusqu'au tiers du rapport entre le volume d'oxygène théorique pour oxyder l'ensemble des polluants volatils et le volume desdits polluants volatils.

On réalise la mise en contact avec une température du courant gazeux supérieure à la température de désorption de l'eau, préférentiellement à une température allant de 500 à 1200 °C, de préférence de 700 à 1000 °C, de manière plus préférée de 800 à 900 °C. Dans ce cas, le courant gazeux traversant la couche de charge solide peut présenter une teneur en oxygène quelconque, dans les limites d'inflammabilité définies précédemment. Ce mode particulier de l'invention permet de traiter des polluants organiques qui peuvent, pour la plupart d'entre eux, être éliminés par pyrolyse. Dans ce cas particulier, une seule zone de mise en contact peut être suffisante.

Dans au moins une zone de mise en contact, un courant gazeux d'appoint peut être injecté directement ou, le cas échéant, mélangé, grâce aux conduites 53, 54, 55, à la fraction du courant gazeux utilisée. Ce courant gazeux d'appoint peut comporter de l'eau et/ou de l'oxygène. De plus, le courant gazeux d'appoint ou la fraction du courant gazeux à laquelle il est mélangé peut être préalablement chauffé.

Avantageusement, au moins l'une des fractions du courant gazeux traversant la couche de charge solide présente une teneur en oxygène allant jusqu'à 20%, de préférence de 2,5 à 15 %, de manière plus préférée allant de 5 à 10 % en volume.

Ceci permet de traiter des polluants qui ne peuvent pas, pour la plupart d'entre eux, être éliminés par pyrolyse.

Dans la première zone de mise en contact 11, on peut réaliser un séchage en portant une première fraction du courant gazeux à une température allant de 500 à 1200 °C, de préférence de 700 à 1000 °C, de manière plus préférée de 800 à 900 °C. La teneur en oxygène peut être quelconque, dans les limites d'inflammabilité définies précédemment.

Dans la seconde zone de mise en contact 12, on peut réaliser une oxydation en mélangeant au courant gazeux circulant dans la conduite 4 un courant gazeux d'appoint comportant de l'oxygène circulant dans la conduite 54, de manière à obtenir un courant gazeux ayant une teneur en oxygène comprise entre 0 et 20 %, de préférence entre 2,5 et 15 %, de manière plus préférée entre 5 et 10 % en volume. La température dans cette deuxième zone de mise en contact peut être inférieure à 500 °C, de préférence inférieure à 300 °C, de manière plus préférée inférieure à 100 °C, par exemple aux alentours de la température ambiante.

Dans la troisième zone de mise en contact 13, on peut réaliser un refroidissement de la charge solide en utilisant un courant gazeux aux alentours de la température ambiante. Dans cette troisième zone, la teneur en oxygène peut être quelconque, dans les limites d'inflammabilité définies précédemment. De préférence, on utilise, dans cette troisième zone, de l'air à la température ambiante.

Après ce cheminement dans le four, la charge traitée est évacuée vers la sortie du four 2 de manière à séparer les effluents gazeux et les effluents solides par le moyen de séparation 20. Lors de cette étape de séparation, on sépare, dans un premier temps, l'effluent gazeux comportant les polluants issus de la charge solide et la charge solide dans le collecteur 21, puis, grâce au cyclone 24, on sépare de l'effluent gazeux venant du collecteur les particules solides qu'il transportait. Cette étape de séparation permet ainsi de récupérer par la conduite 26 des poussières de la charge solide présentes dans l'effluent gazeux.

A l'issu de cette étape, on récupère un effluent gazeux pouvant comporter jusqu'à 30 % en poids d'eau, des polluants organiques volatils, des produits de l'oxydation des polluants organiques et des composés inertes.

La teneur des polluants organiques volatils dans l'effluent gazeux est généralement inférieure à 1 % en volume. Le fait d'obtenir une dilution élevée des polluants organiques dans l'effluent gazeux permet avantageusement de traiter des charges solides dont la teneur initiale en polluants est élevée, c'est à dire une teneur en polluants pouvant aller jusqu'à 15 % en poids.

La charge solide ainsi dépolluée présente, quant à elle, un niveau de pureté supérieur à 95 % en poids, de préférence supérieur à 98 % en poids, de manière plus préférée supérieur à 99 % en poids.

Cette charge solide dépolluée peut avantageusement subir un traitement ultérieur de mise en contact avec de l'eau.

L'effluent gazeux véhiculé par la conduite 25 est ensuite envoyé dans la chambre de combustion 30 où il est oxydé.

Lors de cette étape, on envoie l'effluent gazeux dans une zone d'oxydation formé par la chambre 30 de manière à oxyder les polluants et on récupère un effluent gazeux oxydé. Cette oxydation peut être réalisée par tout moyen connu de l'homme du métier, tel que par combustion ou par oxydation catalytique.

De préférence, on réalise une oxydation par combustion dans une chambre de combustion 30 ou de post-combustion, grâce à un brûleur alimenté en combustible par la conduite 32 et en comburant par la conduite 33. Le temps de séjour des fumées produites dans la chambre de combustion est généralement supérieur à deux secondes. La température en sortie de la chambre de combustion est alors supérieure à 800 °C, de préférence supérieure à 900 °C.

A la sortie de la chambre de combustion l'effluent gazeux oxydé est transporté par la conduite 34. A partir de cette conduite, on envoie par la conduite 35 une portion de l'effluent gazeux oxydé dans une unité de traitement 40 pour traiter ladite portion. Par traiter, on entend généralement éliminer certains composés avant d'envoyer à l'atmosphère cette portion de l'effluent gazeux oxydé.

Lors de ce traitement, on refroidit cette portion de l'effluent gazeux oxydé par trempage dans de l'eau grâce à l'introduction d'eau par la conduite 41 afin de réduire la température à environ 200 °C. Si les gaz présentent un caractère acide, il est possible de rajouter à l'eau de trempage une base, par exemple de la soude, pour neutraliser ces acides par la conduite 42.

Ces gaz refroidis sortent de la chambre de traitement 40 par la conduite 43 et sont mis en contact avec des additifs, tels que de la chaux, du bicarbonate et/ou du charbon actif, par la conduite 44, afin de capturer d'éventuels métaux ou autres polluants tels que des produits soufrés ou chlorés.

La portion de l'effluent gazeux oxydé circulant dans la conduite 43 est soumise à une étape de filtration dans le filtre 45 afin de récupérer des particules formées lors de l'étape d'oxydation et, le cas échéant, les additifs par la conduite 46.

Après filtration, l'effluent gazeux filtré est évacué par la conduite 47 et envoyé dans la cheminée 48.

Une autre portion de l'effluent gazeux oxydé provenant de la conduite 34 est introduite comme courant gazeux dans la conduite 6 pour alimenter conduites 3, 4, 5 des zones de mise en contact 11, 12, 13. Ce recyclage permet avantageusement de récupérer les calories dégagées lors de l'oxydation de l'effluent gazeux dans la chambre 30.

## Revendications

1. Procédé pour dépolluer en continu une charge solide comportant essentiellement des terres ou des boues ainsi que des polluants organiques dans lequel :
a) on fait passer un courant gazeux porté à une température supérieure à la température de désorption de l'eau à travers une couche de charge solide, de manière à récupérer une charge solide dépolluée et un effluent gazeux comportant des polluants,
b) on sépare l'effluent gazeux comportant des polluants de la charge solide dépolluée,
c) on envoie ledit effluent gazeux dans une zone d'oxydation de manière à oxyder les polluants et à récupérer un effluent gazeux oxydé,
d) on envoie une portion de l'effluent gazeux oxydé dans une unité de traitement et on introduit une autre portion de l'effluent gazeux oxydé comme courant gazeux lors de l'étape a).

2. Procédé selon la revendication 1, dans lequel, lors de l'étape a), la vitesse à laquelle on fait passer le courant gazeux à travers la couche de charge solide est inférieure à la vitesse minimum de fluidisation de ladite charge solide.

3. Procédé selon la revendication 2, dans lequel la vitesse du courant gazeux à travers la couche de charge solide est inférieure à 1 m/s, de préférence inférieure à 0,5 m/s, de manière plus préférée inférieure à 0,25 m/s.

4. Procédé selon l'une quelconque des revendications 1 à 3, dans lequel le courant gazeux passé à l'étape a) présente une teneur en eau supérieure à 10 % en volume, de préférence supérieure à 15 % en poids.

5. Procédé selon l'une quelconque des revendications 1 à 4, dans lequel l'étape a) est réalisée à une température allant de 500 à 1200 °C, de préférence de 700 à 1000 °C, de manière plus préférée de 800 à 900 °C.

6. Procédé selon l'une quelconque des revendications 1 à 4, dans lequel l'étape a) est réalisée dans plusieurs zones de mise en contact disposées en série, au moins l'une desdites zones utilisant une fraction du courant gazeux.

7. Procédé selon l'une des revendications 1 à 6, dans lequel au moins une fraction du courant gazeux traversant la couche de charge solide présente une teneur en oxygène allant de 2,5 à 15 %, de préférence allant de 5 à 10 % en volume.

8. Procédé selon l'une quelconque des revendications 1 à 7, dans lequel on introduit un courant gazeux d'appoint contenant de l'oxygène lors de la réalisation de l'étape a).

9. Procédé selon la revendication 8, dans lequel on introduit un courant gazeux d'appoint contenant de l'oxygène dans le courant gazeux utilisé dans l'étape a).

10. Procédé selon la revendication 8 ou 9, dans lequel on introduit un courant gazeux d'appoint contenant de l'oxygène avec le courant gazeux utilisé dans l'étape a).

11. Procédé selon l'une quelconque des revendications 8 à 10, dans lequel on introduit un courant gazeux d'appoint contenant de l'oxygène lors de la réalisation de l'étape c).

12. Procédé selon l'une quelconque des revendications 1 à 11, dans lequel on introduit un courant gazeux d'appoint contenant de l'oxygène dans la zone d'oxydation pour la réalisation de l'étape c).

13. Procédé selon la revendication 12, dans lequel on introduit un courant gazeux d'appoint contenant de l'oxygène dans l'effluent gazeux de l'étape b) avant son introduction dans la zone d'oxydation de l'étape c).

14. Installation pour dépolluer en continu une charge solide comportant :
- au moins un moyen d'alimentation d'un courant gazeux chaud (3, 4, 5) et un moyen d'alimentation de la charge solide (1),
- un dispositif (2) de mise en contact de la charge solide avec le courant gazeux chaud comportant des moyens (14, 27) pour former une couche de charge solide et des moyens (15) permettant de faire passer le courant gazeux à travers la couche de charge solide ainsi formée,
- des moyens de séparation (20) comportant un moyen d'évacuation (22, 26) de la charge solide dépolluée et un moyen d'évacuation (23, 25) d'un effluent gazeux issu du passage du courant gazeux à travers la couche de charge solide,
- un moyen d'oxydation (30) comportant des moyens précurseurs d'une réaction d'oxydation (32, 33) et un moyen d'évacuation (34) d'un effluent gazeux oxydé,
- un moyen d'alimentation (35) d'une unité de traitement pour le nettoyage de l'effluent gazeux oxydé et un moyen de recyclage (6) relié au moyen d'alimentation du courant gazeux.

15. Installation selon la revendication 14, dans laquelle le dispositif (2) de mise en contact de la charge solide avec le courant gazeux comporte :
- un tambour (14) pourvu d'orifices (15) et monté rotatif autour de son axe longitudinal (16), ledit tambour comportant des moyens (17, 18) permettant d'obtenir un écoulement d'une couche de charge dans ledit tambours et
- une enceinte (7), à l'intérieur de laquelle est logé le tambour (14), reliée à au moins un moyen d'alimentation (3, 4, 5) en courant gazeux et comportant des moyens (8, 9, 10) permettant de faire passer le courant gazeux à travers lesdits orifices.

16. Installation selon la revendication 15, dans laquelle les moyens permettant de faire passer le courant gazeux à travers les orifices dans la partie basse du tambour comportent des moyens de distribution de courant gazeux (8, 9, 10) permettant de faire passer des fractions distinctes dudit courant dans différentes zones de mise en contact (11, 12, 13) définies le long de l'axe longitudinal du tambour.

17. Installation selon l'une des revendications 14 à 16, dans laquelle un moyen d'alimentation d'un courant gazeux d'appoint (53, 54, 55) contenant de l'oxygène est relié au moyen d'alimentation du courant gazeux (3, 4, 5).

18. Installation selon l'une des revendications 14 à 17, dans laquelle un moyen d'alimentation d'un courant gazeux d'appoint contenant de l'oxygène est relié à l'enceinte (7).

19. Installation selon l'une des revendications 14 à 18, dans laquelle un moyen d'alimentation d'un courant gazeux d'appoint contenant de l'oxygène est relié au moyen d'oxydation (30).

20. Installation selon l'une des revendications 14 à 19, dans laquelle un moyen d'alimentation d'un courant gazeux d'appoint contenant de l'oxygène est relié au moyen d'évacuation (23, 25) d'un effluent gazeux issu du passage du courant gazeux à travers la couche de charge solide.
